# EUROPEAN PATENT APPLICATION

(11) **EP 4 737 099 A1**
(43) Date of publication of application: **06.05.2026**
(21) Application number: 24210298.6
(22) Date of filing: 31.10.2024
(51) Int. Cl.: B29C 64/124, B29C 64/135, B29C 64/227, B29C 64/268, B29C 64/393, B33Y 10/00, B33Y 30/00, B33Y 50/02

(54) **SYSTEM AND METHOD FOR ADDITIVE MANUFACTURING**

(71) Applicant: Danmarks Tekniske Universitet, 2800 Kongens Lyngby (DK)
(72) Inventor: Hwu, En-Te, 2800 Kongens Lyngby (DK)
(74) Representative: Plougmann Vingtoft a/s

(57) **Abstract**

A system and method for additive manufacturing of an object (90) on a substrate (16), comprising a printing unit (10) with a vat (12) for photocurable resin (14) and a semitransparent membrane (18). The optical unit (20) includes light sources (22) emitting light beams (24) through the membrane, a collimator lens (30), an objective lens (32), and a detector (40) for monitoring properties of the object and substrate. XY-actuators (44,46) position the optical unit, while a collimator lens actuator (62) adjusts the focal point (64) along the optical path (26) to cure the resin at specific positions. This system enables precise layer-by-layer construction of objects by moving the optical unit and adjusting the focal point to cure the resin, ensuring high-resolution and accurate manufacturing.

## Description

### FIELD OF THE INVENTION

The present invention relates to a system for additive manufacturing of objects, particularly for 3D-printing applications.

### BACKGROUND OF THE INVENTION

Additive manufacturing, commonly known as 3D printing, has revolutionized the production of complex objects by enabling the layer-by-layer construction of three-dimensional structures from digital models. Among the various techniques of additive manufacturing, stereolithographic 3D printing stands out for its precision and ability to produce high-resolution objects. This method involves the use of a photocurable resin that solidifies upon exposure to a specific light source, typically a laser or UV light.

Traditional stereolithographic systems, however, face several challenges, including the precise control of the light beam's focal point and the accurate positioning of the optical components relative to the substrate on which an object is printed. These challenges can lead to inaccuracies in the printed object, affecting its structural integrity and overall quality. The resolution of the print may also depend on the size of the steps made by the stepper motor used to adjust the focal point position. Additionally, traditional systems are often expensive due to the high cost of precision components and the complexity of the required control mechanisms.

Hence, an improved system and method for additive manufacturing would be advantageous, and in particular a more efficient, reliable, and cost-effective system and method with lower resolution would be advantageous.

### OBJECT OF THE INVENTION

The object of the present invention is to provide a system and method for additive manufacturing that enhances the precision and efficiency of the printing process.

It is a further object of the present invention to provide an alternative to the prior art.

In particular, it may be seen as an object of the present invention to provide a system and a method that solves the above mentioned problems of the prior art with inaccuracies in the printed object.

### SUMMARY OF THE INVENTION

Thus, the above described object and several other objects are intended to be obtained in a first aspect of the invention by providing a system for additive manufacturing of an object on a received substrate, the system comprising
- a printing unit, the printing unit comprising:
   ▪ a vat configured to accommodate a photocurable resin, such that the substrate and/or the object can be at least partly submerged within the photocurable resin, the vat comprises a semi-transparent membrane, and
- an optical unit, the optical unit comprising:
   ▪ one, or more, light source(s) capable of emitting a single wavelength or multiple wavelengths emitted light beam along an optical path passing through said membrane towards said su bstrate,
   ▪ a collimator lens arranged to receive and collimate said emitted light beam along the optical path,
   ▪ an objective lens adapted to receive, and focus said emitted light beam along the optical path,
   ▪ a detector configured to detect one, or more, properties of the object, the substrate, the cured resin, and/or the membrane from a reflected light beam from the object, the substrate, the cured resin, and/or the membrane, and
   ▪ XY-actuators configured to position the optical unit at a printing position along a XY-plane substantially parallel to the attachment surface of the substrate or the upper surface of the membrane relative to the printing unit;
- wherein the system is adapted to receive the substrate, the substrate is comprising an attachment surface on which the object is manufactured, and the substrate and/or the object is at least partly submerged within the photocurable resin;
- wherein said collimator lens is mechanically displaceable substantially along said optical path by a corresponding collimator lens actuator;
- wherein, when the optical unit is positioned at said printing position, the collimator lens is arranged to be displaced by said collimator lens actuator along the optical path to move a focal point of the emitted light beam along a line (Z) substantially perpendicular to the upper surface of the membrane and/or the attachment surface of the substrate to a curing position; and
- wherein the photocurable resin is adapted to be cured to cured resin at the focal point of the emitted light beam when the focal point has reached said curing position; and
- wherein, to manufacture the object on the received substrate, the system is adapted to move the optical unit between different printing positions, and at each printing position, to move the focal point of the emitted light beam to the curing position, and thereby cure the photocurable resin at the focal point such that the cured resin is attached to the object or the received substrate.

The present invention introduces a novel system for additive manufacturing, specifically designed to enhance the precision and efficiency of 3D printing processes, specifically designed for stereolithographic 3D printing. This system aims to enhance the precision and efficiency of the printing process by incorporating advanced optical and mechanical components.

The key innovation lies in the incorporation of a mechanically displaceable collimator lens, which is actuated along the optical path to adjust the focal point of the emitted light beam. This adjustment occurs along a line (Z) that is substantially perpendicular to the upper surface of the membrane and/or the substrate, reaching a curing position.

Unlike prior art systems that require XYZ-actuators to move the optical unit in all three directions, this invention simplifies the process by utilizing only XY-actuators for movement in the X and Y directions. The Z-direction adjustment is managed by the collimator lens actuator, thereby reducing complexity, and improving reliability. Using a collimator lens actuator to adjust the position of the collimator lens to adjust the focal points a much higher resolution may an achieved. A stepper motor moving the Z-direction may have a stepwise of about 100 nm, but using a displaceable collimator lens a resolution of focus point positioning of less than 1 nm may be obtained.

The system comprises a printing unit with a vat for accommodating photocurable resin. The printing unit is adapted so that a substrate may be mounted in the system. The substrate may be a received substrate, which is purchased separately and then mounted to the system, and therefore not a part of the system when the printer is purchased. The system is designed to receive a substrate provided by the user. The substrate in then mounted in the printing unit. This substrate could be one that the user already possesses or one that is purchased separately.

For printing to start photocurable resin is filled into the vat, and the substrate may be partially submerged in the resin, or the partly printed object, made of cured resin, may be attached to the substrate, and partially submerged in the resin. During the printing process the substrate may be moved relative to the membrane, as layers of the object is printed it may be necessary to move the object to maintain a distance between the object being printed and the membrane.

The optical unit includes one or more light sources, a collimator lens, an objective lens, and a detector. The collimator lens is designed to be mechanically displaced along the optical path by the collimator lens actuator, allowing precise control of the focal point for curing the resin.

This innovative approach ensures that the focal point of the emitted light beam can be accurately positioned to cure the resin at the desired location, in the curing position, so that the newly cured resin is fixed to the substrate, or the object being printed, thereby improving the structural integrity and quality of the printed object. The system's ability to move the optical unit between different printing positions and adjust the focal point in each position to the curing position facilitates the efficient and reliable manufacturing of complex objects.

The optical unit is in the printing position when the emitted light beam when leaving the objective lens is directed towards the point, where the photocurable resin is to be cured.

The focal point is positioned in the curing position when the collimator lens is displaced to a position that results in the that the focal point is positioned in the position or point, where the photocurable resin is to be cured.

The vat is a container configured to hold a photocurable resin. The vat includes a semi-transparent membrane that allows light to pass through while maintaining the resin within the vat. The membrane is mounted to the bottom of the vat, so that the emitted light beam is coming from below the vat passing through the membrane and reaching the attachment surface of the substrate.

The substrate is a platform that may at least partially submerged within the photocurable resin, serving as the base upon which the object is printed.

The optical unit comprise one, or more, light source(s), which is devices capable of emitting a light beam along an optical path passing through said membrane towards the substrate. This light beam may be used to cure the photocurable resin but may also be used for detection of properties of the object, substrate, cured resin, and/or the membrane. The collimator lens is arranged to receive and collimate, make parallel, the emitted light beam along the optical path. The light source may be a laser or a UV source.

The objective lens is adapted to receive the collimated light beam and focus it along the optical path towards the substrate.

The detector comprises a sensor, preferably an optical sensor, configured to detect a least one property of the object, substrate, cured resin, and/or the membrane by analysing the reflected light beam from these components.

The detector may be a device capable of detecting the radiation of the reflected light beam or a part of the radiation of the reflected light beam and to quantify the amount of detected radiation. A commercial photodiode, an LCD camera, or any other optical sensor capable of detecting and quantifying radiation, preferably laser beams, may be used.

The detector may comprise a plurality of sensors to measure different properties of the object, substrate, cured resin, and/or the membrane.

The reflected light beam may be the reflected light from the emitted light beam but may also be scattered or transmitted light from the emitted light beam.

By detecting reflected light beam from the attachment surface of the substrate, the surface of the cured resin, the upper surface of the photocurable resin, the upper surface of the membrane and/or the lower surface of the membrane using the detector, the precise location and form of the different components may be determined. That means that the topography of the membrane and the substrate, possibly including cured resin and hereby the object, and the uncured photocurable resin can be determined to a high degree of precision.

By also knowing the width of the emitted light beam, i.e. the diameter of the cylinder beam or truncated cone beam, the size of a voxel can be determined at all times. The voxel is the 3D volume that is being cured, the voxel (3D pixel) size for the printing may be determined from the width of the emitted light beam or the focused emitted light beam within the photocurable resin and the height of the photocurable polymer-resin between the attachment surface of the substrate possibly with some printed material on the substrate and the upper surface of the membrane.

The detector measures a focus error signal, the detector receives the reflected laser beam and generates a focus error signal to be precise, to predict a location of the focal plane on or in relation to a reflective surface.

In the focal plane, the spot size is the smallest, and the focal plane may either be on the surface or close to the surface to be detected or for photocurable resin to be cured.

XY-Actuators is a mechanism configured to position the optical unit at a specific printing position along a XY-plane that is substantially parallel to the attachment surface of the substrate or the upper surface of the membrane relative to the printing unit.

A key feature of the invention is that the collimator lens is mechanically displaceable along the optical path by a corresponding collimator lens actuator. This displacement allows for precise adjustment of the focal point of the emitted light beam.

When the optical unit is positioned at the designated printing position, the collimator lens can be displaced by the collimator lens actuator along the optical path. This movement adjusts the focal point of the emitted light beam along a line (Z) that is substantially perpendicular to the upper surface of the membrane and/or the substrate, directing the focal point to the curing position.

The photocurable resin is formulated to cure into a solid state at the focal point of the emitted light beam when the focal point reaches the curing position.

By integrating these components, the system ensures accurate curing of the resin at the desired positions, resulting in high-quality, precise layer formation. This invention addresses the limitations of existing stereolithographic systems, providing a more reliable and efficient solution for additive manufacturing.

By addressing the limitations of existing stereolithographic systems, this invention provides a more reliable and efficient solution for additive manufacturing, paving the way for advancements in various industries, including medical, aerospace, and consumer goods.

According to an embodiment, the collimator lens actuator is a stepper motor configured to displace the collimating lens.

This configuration that the collimator lens actuator is a stepper motor, ensures precise and controlled movement of the collimator lens, further enhancing the accuracy of the focal point adjustment.

According to an embodiment, the stepper motor is configured to displace the collimating lens by steps less than 200 nm, preferably less than 150 nm and even more preferably less than 100 nm to shift the focal point of the emitted light beam along a line (Z).

The collimator lens actuator may be a stepper motor configured to displace the collimating lens. The stepper motor is designed to displace the collimating lens along the optical path in steps of less than 200 nm, preferably less than 150 nm, and even more preferably less than 100 nm. When the collimating lens is displaced, the focal point is shifted of moved. Displacing the collimating lens 100 nm may cause the focal point of the emitted light beam to shift or move along the Z-axis by less than 1 nm.

In a preferred embodiment one step will move the collimator 60.9 nm and the laser spot shifting along Z-axis will be 0.78 nm.

This precise control ensures highly accurate positioning of the focal point, which is important for achieving high-resolution and structurally sound printed objects.

This approach ensures that the focal point of the emitted light beam can be accurately positioned to cure the resin at the desired location. The system's ability to move the optical unit between different printing positions and adjust the focal point in each position facilitates the efficient and reliable manufacturing of complex objects.

According to an embodiment, the detector is configured to detect from the reflected light beam a focus error signal (FES) indicative of the displacement of the focal point from an optimal focus position.

The system comprises a detector configured to detect a focus error signal (FES) from the reflected light beam. The FES is indicative of the displacement of the focal point from its optimal focus position. The focus error signal is a parameter that provides real-time feedback on the accuracy of the focal point, allowing for immediate adjustments to maintain optimal focus. This ensures that the emitted light beam consistently cures the resin at the precise location required, thereby enhancing the quality and reliability of the printed objects.

According to an embodiment, the light sources comprise at least one light source, which is a coherent radiation source, such as a laser.

The light sources comprise at least one coherent radiation source, such as a laser. The use of a coherent radiation source ensures a highly focused and consistent light beam, which is essential for precise curing of the photocurable resin.

According to an embodiment, upon detection the at least one property of the object, the substrate, the cured resin and/or the membrane by the detector, the light source(s) emits the emitted light beam at a wavelength or wavelengths that does not cure the resin.

Upon detection of the at least one property of the object, the substrate, the cured resin and/or the membrane by the detector, the light source(s) emits the emitted light beam at a wavelength or wavelengths that do not cure the resin. This feature allows for precise alignment and positioning of the optical components without prematurely curing the resin, thereby ensuring that the curing process only occurs at the intended focal point.

According to an embodiment, when the photocurable resin is to be cured, the light source(s) emits the emitted light beam at a wavelength or wavelengths that cures the resin.

When the photocurable resin is to be cured, the light source emits the emitted light beam at a wavelength or wavelengths that cure the resin. This ensures that the curing process is initiated only when the focal point is accurately positioned, thereby improving the structural integrity and quality of the printed object.

The wavelength may be between 200 nm to 1400 nm, but it is dependent on the specific photocurable resin used, which wavelengths cure the resin and which wavelengths do not.

The photocurable resin may be Acrylate-Based Resins, such as Acrylic Oligomers. Acrylate-Based Resins are typically cured using UV light in the range of 355-405 nm. This range is optimal since most photo initiators absorb effectively within it.

Another possible photocurable resin may be Epoxy Resins, such as Epoxy Acrylate Resins. Epoxy Resins are often cured under UV light, particularly around 365 nm, which is effective for many epoxy-based formulations.

Biocompatible Resins, such as Biocompatible Photocurable Resins, is another option. These resins are typically cured using wavelengths around 405 nm, suitable for medical applications due to their compatibility with biological tissues.

High-Viscosity Resins, such as High-Performance Acrylate Oligomers, may also be used. High-Viscosity Resins may be cured using UV light at approximately 365 nm, allowing for effective polymerization despite their high viscosity, which can exceed 600,000 cps.

Ceramic Slurry Resins, such as Photocurable Ceramic Slurries, are another possibility. These slurries are often cured using UV light in the range of 355-405 nm, facilitating the creation of ceramic structures through additive manufacturing techniques.

Cationically Curable Resins, such as Cationic Photopolymer Resins, are another option. These resins can be cured using laser beams at approximately 650 nm. They are often used in applications requiring precise control over the curing process, such as in electronic components and coatings.

Yet another possible photocurable resin may be UV-Visible Light Curing Resins, such as Visible Light Photocurable Resins. Certain formulations of this resin are designed to cure effectively at wavelengths around 660 nm to 780 nm, making them suitable for LED curing systems. These resins are commonly used in dental applications and other medical devices due to their biocompatibility and controlled curing properties.

High-Performance Acrylic Resins, such as Acrylic Oligomers, may also be used. Some high-performance acrylate resins may be cured using near-infrared light sources, particularly around 750 nm, which allows for deeper penetration into thicker materials, enhancing mechanical properties and adhesion.

According to an embodiment, the detector is configured to detect one or more of the following properties: the roughness of the substrate or the membrane, the topography of the object, the cured resin, the substrate or the membrane, the physical coordinates of the object, the cured resin, the substrate and/or the membrane, parallelism between the substrate and the membrane, the flatness of the substrate or the membrane, the deformation of the substrate or the membrane, the thickness of the photocurable resin and/or the membrane, the transmission characteristics of the photocurable resin and/or the membrane, and the reflection characteristics of the substrate and/or the photocurable resin and/or the membrane.

Roughness refers to the texture of the attachment surface and/or the upper and lower surfaces of the membrane, characterized by the presence of small, irregular deviations from a perfectly smooth surface. It is a measure of the fine irregularities on the surface.

The topography describes the detailed surface features of the attachment surface of the object, the cured resin, the substrate and/or the upper and/or lower surfaces of the membrane, including its contours, elevations, and depressions. It provides a comprehensive map of the surface's shape and structure.

Physical coordinates refer to the specific location or position of points on the object, the cured resin, the substrate, and/or membrane in a defined coordinate system. It includes the x, y, and z coordinates that describe the exact placement and orientation of the substrate or membrane in space.

Parallelism refers to the degree to which the attachment surface of the substrate and/or the upper and/or lower surfaces of membrane is aligned parallel to a reference plane or another surface. It ensures that the surfaces are substantially equidistant at all points.

Flatness is the measure of how even and level the attachment surface of the substrate and/or the upper surface and/or lower surface of the membrane is. It indicates the absence of curvature or waviness across the surface.

Deformation refers to any change in the shape or dimensions of the substrate or membrane due to applied forces or stresses. It includes bending, warping, or any other alteration from the original form.

The thickness of the photocurable resin and/or the membrane is the measure of how thick the layer of photocurable resin or membrane is. It is typically measured in micrometres (µm) or millimetres (mm) and is crucial for ensuring the correct amount of material is applied and cured during the manufacturing process.

Transmission characteristics of the photocurable resin and/or the membrane refers to how well the photocurable resin or membrane allows light to pass through it. It includes properties like transparency, opacity, and the wavelength range of light that can be transmitted through the material.

Reflection characteristics of the substrate and/or the photocurable resin and/or the membrane describes how the substrate, photocurable resin, or membrane reflects light. It includes the amount and angle of light that is reflected off the surface, which can affect the appearance and performance of the material.

According to an embodiment, the membrane is located at the bottom of the vat.

The membrane is located at the bottom of the vat, and the emitted light beam passes from below the vat through the membrane and into the photocurable resin.

According to an embodiment, the detector is configured to detect the thickness of the membrane.

The detector may be configured to detect the thickness of the membrane by detecting the position of both the upper surface and the lower surface of the membrane. This capability allows for precise monitoring and control of the membrane's thickness, ensuring consistent and accurate curing of the resin. By detecting variations in membrane thickness, the system can make necessary adjustments to maintain optimal printing conditions, further enhancing the quality and reliability of the printed objects.

According to an embodiment, the system is configured to adjust the focal point of the emitted light beam to adapt the parallelism and/or the flatness and/or the deformation of the substrate and/or the membrane.

This adaptive capability ensures that the focal point remains accurately aligned with the surface characteristics of the substrate or membrane, thereby maintaining optimal curing conditions, and improving the overall quality of the printed objects.

According to an embodiment, the system comprises a processor configured to control the detector, the light source, the XY-actuators, and the collimator lens actuator.

The processor ensures coordinated and precise control of all system components, enabling real-time adjustments and optimization of the printing process. The processor comprises software to control the detection and the different actuators and possible other moving parts in the system.

According to an embodiment, the additive manufacturing of the object is stereolithographic 3D-printing of the object.

The additive manufacturing of the object is stereolithographic 3D printing. This leverages the precision and high resolution of stereolithographic techniques, utilizing a photocurable resin that solidifies upon exposure to a specific light source.

In a second aspect, the invention relates to a method for additive manufacturing of an object on a substrate, the method comprising:
- providing a printing unit, the printing unit comprising:
   ▪ a vat accommodating a photocurable resin, the vat comprising a semi-transparent membrane, and
- providing an optical unit, the optical unit comprising:
   ▪ one, or more, light source(s) capable of emitting a single wavelength or a multiple wavelength emitted light beam along an optical path passing through said membrane towards said substrate,
   ▪ a collimator lens receiving and collimating said emitted light beam along the optical path,
   ▪ an objective lens receiving and focusing said emitted light beam along the optical path,
   ▪ a detector detecting one, or more, properties of the object, the substrate, the cured resin, and/or the membrane from a reflected light beam reflected from the object, substrate, cured resin and/or membrane, and
   ▪ XY-actuators positioning the optical unit at a printing position along a XY-plane substantially parallel to the attachment surface of the substrate or the upper surface of the membrane relative to the printing unit;
- wherein the system is adapted to receive the substrate, the substrate is comprising an attachment surface on which the object is manufactured, and the substrate and/or the object is at least partly submerged within the photocurable resin;
- the method is further comprising:
   ∘ emitting the emitted light beam at one, or more, wavelength that does not cure the resin,
   ∘ detecting properties of the object, substrate, cured resin and/or the membrane,
   ∘ based on the detected properties, positioning the optical unit at said printing position, and mechanically displacing said collimating lens along said optical path by applying a corresponding collimator lens actuator,
      hereby moving a focal point of the emitted light beam along a line (Z) substantially perpendicular to the upper surface of the membrane and/or the attachment surface of the substrate to a curing position by displacing said collimator lens along the optical path,
   o emitting the emitted light beam at a wavelength that cures the resin, and
   ∘ curing the photocurable resin at the focal point of the emitted light beam when the focal point reaches said curing position;
- wherein, the method further comprising manufacturing the object on the substrate by
   ∘ moving the optical unit between different printing positions, and
   ∘ in each printing position moving the focal point of the emitted light beam to the curing position, and thereby curing the photocurable resin at the focal point such that the cured resin is attached to the object or substrate.

In the second aspect, the invention relates to a method for additive manufacturing of an object. The method involves providing a printing unit that includes a vat accommodating a photocurable resin with a semi-transparent membrane and a substrate partially submerged in the resin. An optical unit is also provided, comprising one or more light sources, a collimator lens, an objective lens, a detector, and XY-actuators. The method includes positioning the optical unit at a printing position, mechanically displacing the collimator lens along the optical path, moving the focal point of the emitted light beam along a line (Z) to a curing position, and curing the resin at the focal point. The method further involves moving the optical unit between different printing positions and curing the resin at each position to form the object on the substrate.

The method may further comprise the steps of calibrating the position and tilt of the membrane and attachment surface based on the detected properties and possible adjust the tilt of the membrane and/or the attachment surface of the substrate before printing. The substrate, the vat and thereby the membrane may also be adjusted so that the membrane is substantially perpendicular to the emitted light beam when the emitted light beam hits the membrane and/or substrate.

In a third aspect, the invention relates to a system for additive manufacturing of an object on a substrate, the system comprising
- a printing unit, the printing unit comprising:
   ▪ a vat configured to accommodate a photocurable resin, such that the substrate and/or the object can be at least partly submerged within the photocurable resin, the vat comprises a semi-transparent membrane, and
   ▪ a substrate comprising an attachment surface on which the object is manufactured;
      and
- an optical unit, the optical unit comprising:
   ▪ one, or more, light source(s) capable of emitting a single wavelength or multiple wavelengths emitted light beam along an optical path passing through said membrane towards said su bstrate,
   ▪ a collimator lens arranged to receive and collimate said emitted light beam along the optical path,
   ▪ an objective lens adapted to receive, and focus said emitted light beam along the optical path,
   ▪ a detector configured to detect one, or more, properties of the object, substrate, cured resin and/or the membrane from a reflected light beam from the object, substrate, cured resin and/or membrane, and
   ▪ XY-actuators configured to position the optical unit at a printing position along a XY-plane substantially parallel to the attachment surface of the substrate or the upper surface of the membrane relative to the printing unit;
- wherein said collimator lens is mechanically displaceable substantially along said optical path by a corresponding collimator lens actuator;
- wherein, when the optical unit is positioned at said printing position, the collimator lens is arranged to be displaced by said collimator lens actuator along the optical path to move a focal point of the emitted light beam along a line (Z) substantially perpendicular to the upper surface of the membrane and/or the attachment surface of the substrate to a curing position; and
- wherein the photocurable resin is adapted to be cured to cured resin at the focal point of the emitted light beam when the focal point has reached said curing position; and
- wherein, to manufacture the object on the substrate, the system is adapted to move the optical unit between different printing positions, and at each printing position, to move the focal point of the emitted light beam to the curing position, and thereby cure the photocurable resin at the focal point such that the cured resin is attached to the object or substrate.

In the third aspect, the invention relates to a system for additive manufacturing of an object on a received substrate. Here, the received substrate is part of the system itself.

The system comprises a printing unit comprises a vat configured to accommodate a photocurable resin and a semi-transparent membrane. Further the system comprises a substrate.

The optical unit includes one or more light sources, a collimator lens, an objective lens, a detector, and XY-actuators. The system comprises a substrate, which may be at least partly submerged within the photocurable resin when printing starts.

The collimator lens is mechanically displaceable along the optical path by a corresponding actuator, allowing the focal point of the emitted light beam to move along a line (Z) to a curing position. The system is designed to move the optical unit between different printing positions, curing the resin at each position to form the object on the received substrate.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The system and method for additive manufacturing according to the invention will now be described in more detail with regard to the accompanying figures. The figures show one way of implementing the present invention and are not to be construed as being limiting to other possible embodiments falling within the scope of the attached claim set.
Fig. 1 illustrates a system for additive manufacturing of an object on a substrate.
Fig. 2 illustrates the focal point and the optical lens.
Fig. 3 illustrates the substrate placed within the vat.
Fig. 4 illustrates that the focal point is placed at different positions depending on the displacement of the collimator lens.
Fig. 5 shows an example of a flatness map extracted from the membrane of a vat.
Fig. 6 is a flowchart illustrating the method according to the invention.

### DETAILED DESCRIPTION OF AN EMBODIMENT

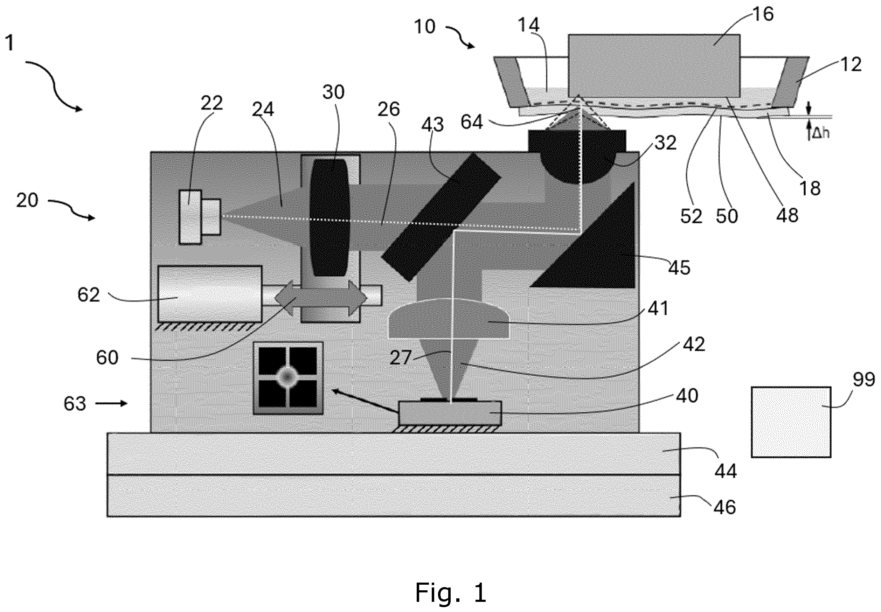

Fig. 1 illustrates a system 1 for additive manufacturing of an object 90 on a substrate 16. The system comprises a printing unit 10 and an optical unit 20.

The printing unit 10 comprises a vat 12 configured to accommodate a photocurable resin 14. The vat 12 comprises a semi-transparent membrane 18 at its base.

The optical unit 20 comprising:
- one or more light sources 22 capable of emitting a light beam 24. The light beam is comprising a single wavelength or multiple wavelengths. The emitted light beam 24 travels along an optical path 26 passing through the semi-transparent membrane 18 towards the received substrate 16.
- A collimator lens 30 positioned to receive and collimate the emitted light beam 24 along the optical path 26.
- An objective lens 32 adapted to receive and focus the collimated light beam along the optical path 26.
- A detector 40 configured to detect the properties, especially the physical coordinates, of the object 90, the substrate 16, the cured resin 15, and/or the membrane 18 by detecting a reflected light beam 42 from these components.
- XY-actuators 44, 46 configured to position the optical unit 20 at a printing position along a XY-plane that is substantially parallel to the attachment surface 48 of the received substrate 16 and/or the upper surface 52 of the membrane 18.

The system 1 is designed to receive the substrate 16, on which the object 90 is formed. The received substrate 16 includes an attachment surface 48 on which the object 90 is manufactured. The photocurable resin 14 is accommodated by the vat, so that the substrate 16 and/or the object 90 may be at least partly submerged within the photocurable resin 14.

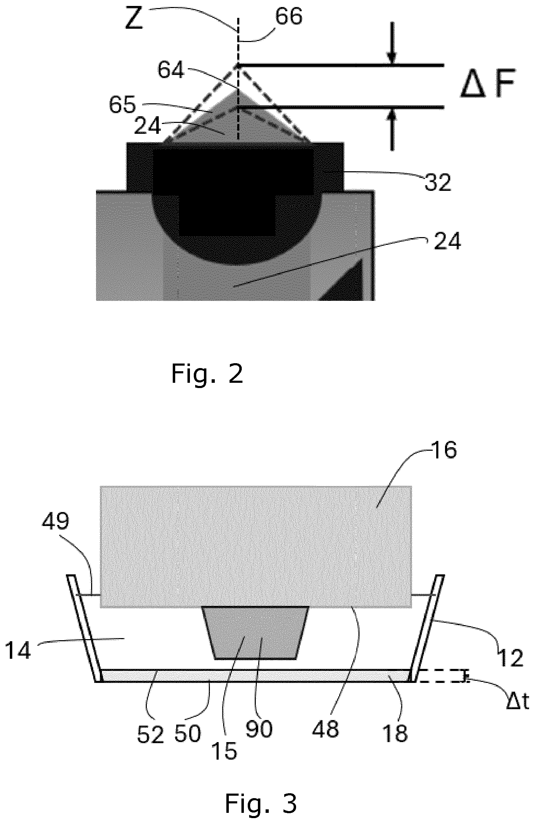

The collimator lens 30 is mechanically displaceable along the optical path 26 by a corresponding collimator lens actuator 62, which can move back and forth illustrated by an arrow 60. When the optical unit 20 is positioned at the printing position, the collimator lens 30 can be displaced by the collimator lens actuator 62 along the optical path 26 to move the focal point 64 of the emitted light beam 24 along a line Z (see fig. 2) that is substantially perpendicular to the upper surface 52 of the membrane 18, the lower surface 50 of the membrane and/or the attachment surface 48 of the substrate 16 to a curing position.

The photocurable resin 14 is adapted to be cured to form cured resin 15 at the focal point 64 of the emitted light beam 24 when the focal point reaches the curing position.

To manufacture the object 90 on the received substrate 16, the system 1 is adapted to move the optical unit 20 between different printing positions. In each printing position, the focal point 64 of the emitted light beam 24 is moved to the curing position, curing the photocurable resin 14 at the focal point 64 such that the cured resin 15 is attached to the object 90 or the received substrate 16.

Further fig. 1 shows additional lenses and mirrors. A detector lens 41 is focusing the reflected light beam 42 at the detector 40. A first mirror 43 is reflecting the reflected light beam 42 towards the detector along a reflected optical path 27. The reflected light beam substantially are following the reflected optical path 27. Further fig. 1 shows a second mirror 45 reflecting both the emitted light beam 24 and the reflected light beam 42. There may be further not shown optical components in the optical unit, but fig. 1 illustrates the principal idea of the invention.

The X-actuator 44 and the Y-actuator 46 moves the optical unit 20 along the XY-plane and hereby the optical unit 20 can be placed in a printing position 63, when in the printing position the emitted light beam when leaving the objective lens 32 is directed towards the point, where the photocurable resin is to be cured.

Fig. 2 illustrates the optical lens 32. When the collimation lens 30 is displaced by the collimator lens actuator 62 the focal point 64 is moved along the line Z 66 with ΔF illustrating the span the focal point can be moved over showing the two extreme positions.

Fig. 3 illustrates the substrate 16 placed within the vat 12. The vat comprises semi-transparent membrane 18. The vat 12 is filled with photocurable resin 14, which comprises an upper resin surface 49. The cured resin 15 is attached as the object 90 being printed, to the attachment surface 48 of the substrate. The membrane 18 comprises and upper surface 52 and a lower surface 50. The thickness of the membrane is illustrated by Δt.

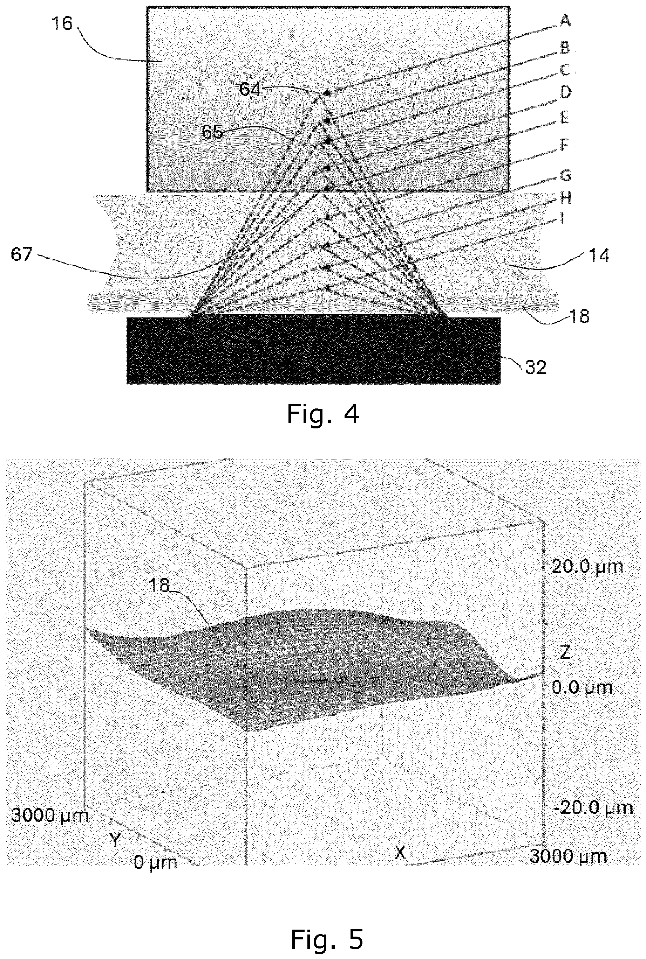

Fig. 4 illustrates that the focal point 64 is placed at different positions depending on the displacement of the collimator lens. By knowledge of the position of the collimator lens it is possible by the processor to calculate and determine the position of the focal point 64 of the emitted light beam. Depending on the position of the collimator lens fig. 4 illustrates 9 different positions of the focal point 64. Obviously, the focal point has to be placed in the curing position 67. In fig. 4 it is the point F that is the curing position 67. Therefore, to position the focal point in the curing position the collimator lens is displaced to a position that results in the that the focal point is positioned in the curing position.

Each of the positions A-I of the focal point results in different focus error signals (FES) during the detection step and thereby the correct position can be determined.

The cone-shape 65 of the focused emitted light beam 24, changes dependent on the position of the collimator lens.

Some of the measured properties for the membrane and substrate is optical, like transmission, reflection, and absorption, which is directly used to calculate the power or intensity of the first radiation entering the voxel within the photocurable resin. This calculation is performed by a processor or a computer having the suitable software, as the reflected light beam can be subtracted from the emitted light beam and give a difference in energy that corresponds to the disposed energy in the material. This calculation may be stored within the program for a given membrane, substrate, and material. Thus, a database of properties for different consumables may be generated.

Using a non-curing emitted light beam, the photocurable resin in the vat can be detected. While moving the focal point of the non-curing emitted light beam along the vertical direction to pass the interface of the material so that the light beam is at least partly reflected, the detector receives the reflected light beam. The interface of the material may be the interface between the photocurable resin and air to detect the upper resin surface of the photocurable resin or the interface between the photocurable resin and the membrane to detect the upper surface of the membrane. Then the height or distance difference between the upper surface of the membrane, and the upper resin surface of the photocurable resin, may be calculated. The system may estimate the amount of residual photocurable resin in the vat by the height or distance difference. The function can be realized by two extra sensors (one for maximum, one for minimum).

In an embodiment, the photocurable resin in the vat might be refilled during the printing process or after the printing process is performed.

The disclosure allows the measurement of printed surface topography. While scanning the focal point of the emitted light beam along the printed surface, the detector can measure the surface height of each point by the feedback signal which is the reflected light beam. After collecting all the height or coordinate information, the surface topography of the printed object can be constructed.

Different types of photocurable resins may require different wavelengths of the emitted light beam depending on the chemical processes involved during the particular curation process.

Preferably, the manufactured object is a 3D object or structure. Alternatively, planar 2D objects may be manufactured by the disclosed method by curing one or more monolayers of the photocurable resin. Quasi-2D may also be manufactured by selectively curing a stack of monolayers to form a structure predominantly flat across its outermost surface in contact with the photocurable resin. Arrays of quasi-1D objects or structures may be manufactured, wherein said arrays might comprise a periodic structure.

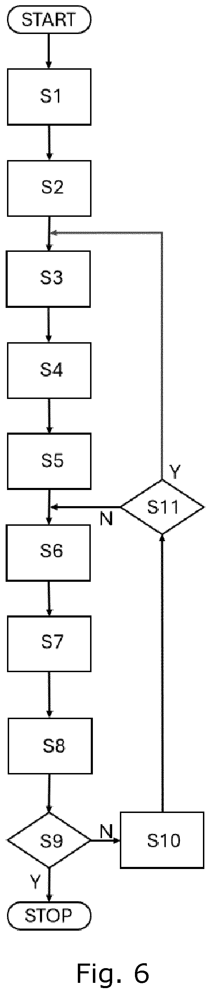

Fig. 6 is flowchart illustrating the method of the invention. The first steps are providing S1 a printing unit 10 and providing S2 an optical unit 20. Then the method is further comprising the step of emitting S3 the emitted light beam 24 at a wavelength that does not cure the resin 14. Then the system is detecting S4 properties of the object 90, substrate 16, cured resin 15 and/or the membrane 18. The next step is positioning S5 the optical unit 20 in said printing position based on the detected properties. Then the next step is moving S6 a focal point 64 to a curing position by displacing said collimator lens 30 along the optical path by applying a collimator lens actuator 62. The next step is emitting S7 the emitted light beam 24 at a wavelength that cures the resin. Then the next step is curing S8 the photocurable resin 14 at the focal point at the curing position.

In the step S9 the method checks whether the printing is completed. If the printing is not completed (N) the system goes to step S10, where it is moving the optical unit 20 to a different printing position and then the method goes back to the step S6 and goes through the steps S6 to S9 again and again until the printing is completed.

Optional there may be a step S11 deciding whether the method should go to step S3 and make another detection process to detect properties of the object 90, substrate 16, cured resin 15 and/or the membrane 18 or go to step S6 and continue printing. When printing large objects, it may be beneficial to make extra detection rounds, to make sure everything is all right, or if conditions like temperature and moisture may change an additional detection step may be beneficial. But otherwise, the system works so precisely that only a detection step at the beginning of the printing process may be required.

When the system is started up, and the substrate 16 is attached to the system, an emitted light beam 24 is emitted from the light source(s) 22 at one or more wavelengths that does not cure the resin 14. The emitted light beam 24 is reflected from different surfaces, it may be from the attachment surface of the substrate, the upper surface of the membrane, the lower surface of the membrane and/or the upper resin surface. The reflected light forms the reflected light beam, which is directed to the detector, which then is detecting different properties. Especially the position and geometry of the vat membrane is determined using the focus error signal. But also, properties like position, geometry and tilt of the membrane may be detected.

The membrane may be calibrated in terms of position and tilt. This may be possible due to stepper-motors attached to the vat, allowing for up/down movement of the corners of the vat changing the tilt of the vat.

Using geometrical calculations, the attachment surface is measured. The processor then calculates the tilt, determines the necessary movement to parallelize the membrane with the substrate, and activates actuators to move the substrate and/or the vat comprising the membrane. This is iterated until sufficient parallelism is achieved. Normally, parallelism around 1 µm can be achieved using this method, iterating 2-3 times. This is over a surface of several mm to cm in length/width.

The substrate, the vat and thereby the membrane may also be adjusted so that the membrane is perpendicular to the emitted light beam.

When the substrate is adjusted so that the substrate is parallel to a plane in which the optical unit is movable in the XY-plane by stages or motors, a measurement of the surface flatness of the substrate may be made.

Thise measurements of the membrane and substate may constitute the base-layer of the printing calibration. By knowing the exact position of all points of the membrane surfaces, and all the points of the attachment surface of the substrate, the optical unit can be positioned relative to the surface of the membrane and substrate.

When sufficient parallelism between the membrane and the printing substrate surface is achieved, the substrate printing surface may be measured once more to determine its flatness. This map may be stored in memory accessible to the processor or into a database.

Fig. 5 shows an example of a flatness map extracted from the membrane 18 of the vat. Note that the height variations are in the order of 10 µm, implying that the membrane is reasonably flat, and that the method herein disclosed is capable of encompassing for the measured variation in height. Also, notice that the x-axis and y-axis goes from -3000 µm to 3000 µm and therefore is of a different scale than the z-axis going from -30.0 µm to 30 µm.

All the above steps can be performed using a non-curable emitted light beam while the vat is filled with photocurable resin. When both surfaces, i.e. the attachment surface of the substrate and the upper surface of the semi-transparent membrane facing the photocurable resin, are measured and the data are stored, the optics are adjusted and the optical unit 20 positioned in the printing position 63.

As layers can only be added to the object, the processor 99 must do the prediction based upon the entire object, layer-for-layer, and not just for a local area.

When the positions, trajectories, layers, and laser/optical settings are calculated, the printing may be initialized. Here, the processor may calculate the corrected path that takes the surface calibration measurement of the membrane into account to determine the different printing positions, and for each printing position corresponding curing positions.

As the distance between the membrane attachment surface and the focal point of the laser may be a crucial parameter to control the voxel width, the offset between the focal point and membrane may advantageously be kept the same at all times for enabling high and uniform printing resolution.

The printing process constitutes of layer-by-layer printing, the achieved resolution for each coordinate of the print is determined by the size of the voxel at that coordinate.

Typically, the voxel is 2-20 µm in diameter and 5-25 µm in height, like a cylinder or more precisely a truncated cone since the first radiation is focused. The nature of the high resolution of this system causes feedback-control and inspection of the print extremely difficult.

A detection step may be performed between each printed layer, but this is rarely necessary. Because all moving parts are calibrated and monitored in the same system software, all movements are being accounted for. Thus, very little active monitoring is necessary during the printing. Flatness, parallelization, and distance are constant. It may be possible to print the entire object without making any additional detection steps during the printing process.

Some distortions of the membrane and/or the substrate and/or the photocured resin can occur because of environmental changes such as temperature and humidity. This can be avoided by using a temperature sensor and/or a humidity sensor embedded into the system. Temperature and humidity can be actively controlled and monitored with a PID (proportional-integral-derivative) controller-like system. During the printing process, the system controls temperature dependent displacements of frame and internal components. This is done with reference to point-measurements relating displacements of the membrane and/or the substrate and/or the photocured resin to temperature changes. This way constant and precise position of most parts can be controlled.

For improving the printing result, dust in the environment around the photocurable resin should be avoided or at least be kept below a certain predefined level. In this connection, the system may comprise a dust particle measuring device for determining the number of particles in the vat, e.g. just above the photocurable resin. The system may be positioned in a dust proof chamber, where the chamber preferably is kept at an overpressure, e.g. by a pump, for preventing dust particles to enter the environment around the photocurable resin.

As the printing finishes, the substrate moves up, away from the vat, and the printing surface with the object can be taken off from the substrate for washing and post-print-processing.

The method may comprise the step of providing an analyser unit connected to the processor configured such that the properties of the membrane and/or the substrate and/or the photocured resin is measured and compared with a predefined properties of the same kind, adjusting the position of the vat, preferably the membrane; adjusting the position of the substrate and/or the membrane such that the substrate and the membrane are parallel.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A system for additive manufacturing of an object (90) on a received substrate (16), the system comprising
- a printing unit (10), the printing unit comprising:
▪ a vat (12) configured to accommodate a photocurable resin (14), such that the substrate (16) and/or the object (90) can be at least partly submerged within the photocurable resin (14), the vat comprises a semi-transparent membrane (18), and
- an optical unit (20), the optical unit comprising:
▪ one, or more, light source(s) (22) capable of emitting a single wavelength or multiple wavelengths emitted light beam (24) along an optical path (26) passing through said membrane (18) towards said substrate (16),
▪ a collimator lens (30) arranged to receive and collimate said emitted light beam along the optical path,
▪ an objective lens (32) adapted to receive, and focus said emitted light beam along the optical path,
▪ a detector (40) configured to detect one, or more, properties of the object (90), the substrate (16), the cured resin (15) and/or the membrane (18) from a reflected light beam (42) from the object, the substrate, the cured resin and/or the membrane, and
▪ XY-actuators (44, 46) configured to position the optical unit (20) at a printing position (63) along a XY-plane substantially parallel to the attachment surface (48) of the substrate or the upper surface (52) of the membrane relative to the printing unit (10);
- wherein the system (1) is adapted to receive the substrate (16), the substrate is comprising an attachment surface (48) on which the object is manufactured;
- wherein said collimator lens (30) is mechanically displaceable substantially along said optical path (26) by a corresponding collimator lens actuator (62);
- wherein, when the optical unit (20) is positioned at said printing position (63), the collimator lens (30) is arranged to be displaced by said collimator lens actuator (62) along the optical path (26) to move a focal point (64) of the emitted light beam (24) along a line (Z) substantially perpendicular to the upper surface (52) of the membrane (18) and/or the attachment surface (48) of the substrate (16) to a curing position (67); and
- wherein the photocurable resin (14) is adapted to be cured to cured resin (15) at the focal point (64) of the emitted light beam (24) when the focal point has reached said curing position; and
- wherein, to manufacture the object (90) on the received substrate (16), the system (1) is adapted to move the optical unit (20) between different printing positions (63), and at each printing position, to move the focal point (64) of the emitted light beam (24) to the curing position (67), and thereby cure the photocurable resin (14) at the focal point such that the cured resin (15) is attached to the object or the received substrate.

2. The system according to claim 1, wherein the collimator lens actuator (62) is a stepper motor configured to displace the collimating lens (30).

3. The system according to claim 2, wherein the stepper motor (62) is configured to displace the collimating lens (30) along a line (Z) by steps less than 200 nm, preferably less than 150 nm and even more preferably less than 100 nm to shift the focal point (64) of the emitted light beam (24).

4. The system according to any of the preceding claims, wherein the detector (40) is configured to detect from the reflected light beam (24) a focus error signal (FES) indicative of the displacement of the focal point (64) from an optimal focus position.

5. The system according to any of the preceding claims, wherein the light sources (22) comprise at least one light source, which is a coherent radiation source, such as a laser.

6. The system according to any of the preceding claims, wherein, upon detection of the at least one property of the object (90), the substrate (16), the cured resin (15) and/or the membrane (18) by the detector (40), the light source(s) (22) emits the emitted light beam (24) at a wavelength or wavelengths that does not cure the resin (14).

7. The system according to any of the preceding claims, wherein, when the photocurable resin (14) is to be cured, the light source(s) (22) emits the emitted light beam (24) at a wavelength or wavelengths that cures the resin (15).

8. The system according to any of the preceding claims, wherein the detector (40) is configured to detect one or more of the following properties: the roughness of the substrate (16) or the membrane (18), the topography of the of the object, the cured resin, substrate or the membrane, physical coordinates of the of the object, the cured resin, the substrate and or the membrane, parallelism between the substrate and the membrane, the flatness of the substrate or the membrane, the deformation of the substrate or the membrane, the thickness of the photocurable resin and/or the membrane, the transmission characteristics of the photocurable resin and/or the membrane, and the reflection characteristics of the substrate and/or the photocurable resin and/or the membrane.

9. The system according to any of the preceding claims, wherein the membrane (18) is located at the bottom of the vat (12).

10. The system according to any of the preceding claims, wherein the detector (40) is configured to detect the thickness of the membrane 18.

11. The system according to any of the preceding claims, wherein the system (1) is configured to adjust the focal point (64) of the emitted light beam (24) to adapt the parallelism and/or the flatness and/or the deformation of the substrate (16) and/or the membrane (18).

12. The system according to any of the preceding claims, wherein the system (1) comprises a processor (99) configured to control the detector (40), the light source (22), the XY-actuators (44, 46), and the collimator lens actuator (62).

13. The system according to any of the preceding claims, wherein the additive manufacturing of the object is stereolithographic 3D-printing of the object (90).

14. A method for additive manufacturing of an object (90) on a substrate (16), the method comprising:
- providing a printing unit (10), the printing unit comprising:
▪ a vat (12) accommodating a photocurable resin (14), the vat comprising a semi-transparent membrane (18), and
- providing an optical unit (20), the optical unit comprising:
▪ one, or more, light source(s) (22) capable of emitting a single wavelength or a multiple wavelength emitted light beam (24) along an optical path (26) passing through said membrane (18) towards said substrate (16),
▪ a collimator lens (30) receiving and collimating said emitted light beam along the optical path,
▪ an objective lens (32) receiving and focusing said emitted light beam along the optical path,
▪ a detector (40) detecting one, or more, properties of the object (90), substrate (16), cured resin (15) and/or the membrane (18) from a reflected light beam (42) reflected from the object, substrate, cured resin and/or membrane, and
▪ XY-actuators (44, 46) positioning the optical unit at a printing position (63) along a XY-plane substantially parallel to the attachment surface (48) of the substrate or the upper surface (52) of the membrane relative to the printing unit;
- wherein the system is adapted to receive the substrate (16), the substrate is comprising an attachment surface on which the object is manufactured, and the substrate and/or the object (90) is at least partly submerged within the photocurable resin (14);
- the method is further comprising:
∘ emitting the emitted light beam (24) at one, or more, wavelength(s) that does not cure the resin (14),
∘ detecting properties of the object (90), substrate (16), cured resin (15) and/or the membrane (18),
∘ based on the detected properties, positioning the optical unit (20) at said printing position (63), and mechanically displacing said collimating lens (30) along said optical path (26) by applying a corresponding collimator lens actuator (62),
hereby moving a focal point (64) of the emitted light beam (24) along a line (Z)(66) substantially perpendicular to the upper surface (52) of the membrane and/or the attachment surface (48) of the substrate to a curing position (67) by displacing said collimator lens (30) along the optical path (26),
∘ emitting the emitted light beam (24) at a wavelength that cures the resin (15), and
∘ curing the photocurable resin (14) at the focal point (64) of the emitted light beam (24) when the focal point reaches said curing position (67);
- wherein, the method further comprising manufacturing the object (90) on the substrate (16) by
∘ moving the optical unit (20) between different printing positions, and
∘ in each printing position (63) moving the focal point (64) of the emitted light beam (24) to the curing position (67), and thereby curing the photocurable resin at the focal point such that the cured resin is attached to the object or substrate.

15. A system for additive manufacturing of an object (90) on a substrate (16), the system (1) comprising
- a printing unit (10), the printing unit comprising:
▪ a vat (12) configured to accommodate a photocurable resin (14), such that the substrate (16) and/or the object (90) can be at least partly submerged within the photocurable resin (14), the vat comprises a semi-transparent membrane (18), and
▪ a substrate (16) comprising an attachment surface on which the object is manufactured;
and
- an optical unit (20), the optical unit comprising:
▪ one, or more, light source(s) (22) capable of emitting a single wavelength or multiple wavelengths emitted light beam (24) along an optical path (26) passing through said membrane (18) towards said substrate (16),
▪ a collimator lens (30) arranged to receive and collimate said emitted light beam along the optical path,
▪ an objective lens (32) adapted to receive, and focus said emitted light beam along the optical path,
▪ a detector (40) configured to detect one, or more, properties of the object (90), substrate (16), cured resin (15) and/or the membrane (18) from a reflected light beam (42) from the object, substrate, cured resin and/or membrane, and
▪ XY-actuators (44, 46) configured to position the optical unit at a printing position (63) along a XY-plane substantially parallel to the attachment surface (48) of the substrate or the upper surface (52) of the membrane relative to the printing unit (10);
- wherein said collimator lens (30) is mechanically displaceable substantially along said optical path (26) by a corresponding collimator lens actuator (62);
- wherein, when the optical unit (20) is positioned at said printing position (63), the collimator lens (30) is arranged to be displaced by said collimator lens actuator (62) along the optical path (26) to move a focal point (64) of the emitted light beam (24) along a line (Z) (66) substantially perpendicular to the upper surface (52) of the membrane and/or the attachment surface (48) of the substrate to a curing position (67); and
- wherein the photocurable resin (14) is adapted to be cured to cured resin (15) at the focal point (64) of the emitted light beam (24) when the focal point has reached said curing position; and
- wherein, to manufacture the object (90) on the substrate (16), the system (1) is adapted to move the optical unit (20) between different printing positions, and at each printing position (63), to move the focal point (64) of the emitted light beam (24) to the curing position (67), and thereby cure the photocurable resin at the focal point such that the cured resin is attached to the object or substrate.
